# EUROPÄISCHE PATENTANMELDUNG

(11) **EP 1 300 925 A2**
(43) Veröffentlichungstag der Anmeldung: **09.04.2003**
(21) Anmeldenummer: 02022046.3
(22) Anmeldetag: 01.10.2002
(51) Int. Cl.: H02K 7/116, H02K 16/00

(54) **Stellmotor für Kfz-Funktionsteile mit einem eine zuschaltbare Selbsthemmung aufweisenden Getriebe**

(30) Priorität: 08.10.2001 DE 10149479
(71) Anmelder: SIEMENS AKTIENGESELLSCHAFT, 80333 München (DE)
(72) Erfinder: Viernekes, Gerald, 97437 Hassfurt (DE)

(57) **Zusammenfassung**

Ein Stellantrieb für bewegliche Funktionsteile in Kraftfahrzeugen wie Fenster, Tür, Schiebedach, Sitzverstellung, elektrische Parkbremse oder dergleichen, mit einem Antriebsmotor und einem nachgeschalteten, an das bewegliche Funktionsteil gekoppelten Getriebe, steht wenigstens ein Getriebeteil (13) des Getriebes (11) in einer ständigen Wirkverbindung mit einer zusätzlichen, von einem Antrieb (Antriebsmotor 10; Schneckenmotor 17) synchron mit der Bewegung des Getriebeteils (13) angetriebenen, selbsthemmend ausgelegten Schnecke (16).

## Beschreibung

Die Erfindung betrifft einen Stellantrieb für bewegliche Funktionsteile in Kraftfahrzeugen wie Fenster, Tür, Schiebedach, Sitzverstellung, elektrische Parkbremse oder dergleichen, mit einem Antriebsmotor und einem nachgeschalteten, an das bewegliche Funktionsteil gekoppelten Getriebe.

Ein Stellantrieb mit den vorgenannten Merkmalen ist in einer Anwendung als Antrieb für einen Fensterheber als bewegliches Funktionsteil in einem Kraftfahrzeug aus der DE 27 29 398 A1 bekannt. Die Motorwelle des als Gleichstrommotor ausgebildeten Antriebsmotors trägt ein Schneckenrad, welches seinerseits ein weiteres Ritzel als Teil der Antriebswelle für den Fensterheber antreibt. Soweit es bei einer derartigen Anwendung wünschenswert ist, der Öffnung des Fensters ohne Zuschaltung des Antriebsmotors, also durch einfaches Niederdrücken des Fensters, einen möglichst großen Widerstand entgegenzusetzen, besteht eine praktizierte Lösung darin, den Wirkungsgrad des eingesetzten Getriebes so niedrig auszulegen, dass es einer erheblichen Kraft oberhalb einer festgelegten Schwelle bedarf, um das Fenster entgegen dem bei stehendem Antriebsmotor vom Getriebe ausgehenden Widerstand in die Öffnungsstellung zu verbringen. Ein aus Sicherheitsgründen eingerichteter oder aber bei anderen Anwendungen wie Schiebe-Hebe-Dächern als Funktionsteilen systembedingter schlechter Getriebewirkungsgrad bringt jedoch zwangsläufig den Nachteil mit sich, dass der Antriebsmotor entsprechend groß ausgelegt sein muss, um die reguläre Bewegung des betreffenden Funktionsteiles durchzuführen.

Der Erfindung liegt daher die Aufgabe zugrunde, einen Stellantrieb mit den eingangs genannten Merkmalen derart auszulegen, dass einerseits während des Betriebs des Antriebsmotors zur Bewegung des Funktionsteiles ein guter Getriebewirkungsgrad sichergestellt, andererseits jedoch bei stillstehendem Antriebsmotor eine Selbsthemmung des Getriebes verwirklicht ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass wenigstens ein Getriebeteil des Getriebes in einer ständigen Wirkverbindung mit einer zusätzlichen, von einem Antrieb synchron mit der Bewegung des Getriebeteils angetriebenen, selbsthemmend ausgelegten Schnecke steht. Die Auslegung der auf das Getriebeteil einwirkenden Schnecke als selbsthemmende Schnecke bedeutet, dass nur bei einer aktiven Drehbewegung der Schnecke mittels des ihr zugeordneten Antriebs eine Drehung des damit zusammenwirkenden Getriebeteils möglich ist, so dass bei stehender Schnecke das betreffende Getriebeteil in seiner Drehbewegung blockiert ist. Ist also der Antrieb der selbsthemmenden Schnecke nicht zugeschaltet, ist aufgrund der ständigen Wirkverbindung der selbsthemmenden Schnecke mit wenigstens einem Getriebeteil das zwischen dem Antriebsmotor und dem zu bewegenden Funktionsteil eingeschaltete Getriebe vollständig blockiert, so dass bei einer Krafteinwirkung auf das bewegliche Funktionsteil dessen Bewegung ausgeschlossen bzw. nur bei einer vollständigen Zerstörung des Getriebes möglich ist.

Mit der Erfindung ist der Vorteil verbunden, dass trotz der Ausbildung des Getriebes als bei Abschaltung des Schneckenantriebs selbsthemmendes Getriebe der Getriebewirkungsgrad bei Zuschaltung des Antriebs für die Schnecke dem Wirkungsgrad des entsprechend aufgebauten Getriebes ohne Selbsthemmung entspricht, mithin die Selbsthemmung also nur in den gewünschten Betriebszuständen zuschaltbar ist. Aufgrund der mit der Drehung des mit der Schnecke zusammenwirkenden Getriebeteils gleichgerichteten Drehrichtung der Schnecke treten im Gesamtgetriebe keine zusätzlichen Verluste durch Reibung auf. Soweit zwischen dem Antriebsmotor und dem mit der selbsthemmenden Schnecke zusammenwirkenden Getriebeteil weitere Getriebestufen angeordnet sind, brauchen die Haltekräfte ausgehend von der Antriebswelle für das bewegliche Funktionsteil nur bis zu dem mit der selbsthemmenden Schnecke zusammenwirkenden Getriebeteil aufgefangen werden, so dass eine entsprechend robuste Auslegung der zum Antriebsmotor hin liegenden Getriebestufen nicht erforderlich ist.

Je nach den Funktionsabläufen bei dem über den Stellantrieb zu bewegenden Funktionsteil des Kraftfahrzeuges ist nach einem Ausführungsbeispiel der Erfindung vorgesehen, dass der Antrieb für die Drehung der selbsthemmenden Schnecke in beiden Drehrichtungen des Getriebeteils eingerichtet ist.

Nach einem Ausführungsbeispiel der Erfindung ist vorgesehen, dass zum Antrieb der selbsthemmenden Schnecke ein gesonderter Schneckenmotor vorgesehen ist. Hiermit ist der Vorteil verbunden, dass der Antrieb für die Drehbewegung der selbsthemmenden Schnecke unterstützend zu der vom Antriebsmotor ausgehenden Antriebsleistung wirkt, so dass der Antriebsmotor des Stellantriebes mit einer entsprechend geringeren Leistung ausgelegt werden kann.

Alternativ kann vorgesehen sein, dass die selbsthemmende Schnecke an den Antriebsmotor des Stellantriebes gekoppelt ist; in diesem Fall wirkt sich der hohe Wirkungsgrad des nur bei Abschaltung des Antriebsmotors selbsthemmend wirkenden Getriebes positiv aus.

Soweit nach einem Ausführungsbeispiel der Erfindung das Getriebe als Stirnradgetriebe ausgebildet ist, steht die selbsthemmende Schnecke in ständigem Eingriff mit der an einem Stirnrad ausgebildeten Verzahnung. Soweit alternativ das Getriebe als Schneckenradgetriebe ausgebildet ist, ist vorgesehen, dass die selbsthemmende Schnecke in ständigem Kämmeingriff mit der an dem Schneckenrad ausgebildeten Verzahnung steht.

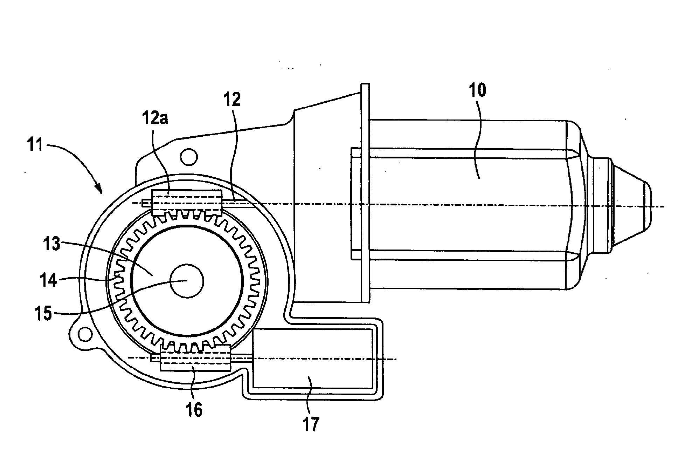

Die Erfindung wird nachstehend anhand eines Ausführungsbeispiels beschrieben; die einzige Figur zeigt einen Stellantrieb für eine elektrische Parkbremse in einer schematischen Darstellung.

Der aus der Zeichnung ersichtliche Stellantrieb hat einen Antriebsmotor 10, der über ein Schneckenradgetriebe 11 eine Abtriebswelle 15 antreibt. Hierzu ist der Antriebsmotor 10 an eine Schneckenwelle 12 gekoppelt, deren Schneckenkopf 12a in die Außenverzahnung 14 eines Schneckenrades 13 angreift. Das Schneckenrad 13 ist mit der Abtriebswelle 15 gekoppelt.

Eine selbsthemmend ausgelegte Schnecke 16 steht in ständigem Kämmeingriff mit der Außenverzahnung 14 des Schneckenrades 13, wobei die Schnecke 16 bei dem dargestellten Ausführungsbeispiel von einem gesonderten Schneckenmotor 17 angetrieben wird. Wie nicht weiter dargestellt, kann auch vorgesehen sein, die Schnecke 16 über ein zusätzliches Getriebe an den Antriebsmotor 10 anzukuppeln, so dass auch in diesem Fall die selbsthemmende Schnecke 16 sich jeweils in der Drehrichtung des Antriebsmotors 10 dreht.

Wird der Antriebsmotor 10 auf ein entsprechendes Signal in Funktion gesetzt und dreht das Schneckenrad 13, so wird gleichzeitig der Schneckenmotor 17 angesteuert, der die selbsthemmende Schnecke 16 in einer mit der Drehung des Schneckenrades 13 synchronen Drehung bewegt. Da in diesem Bewegungszustand die Selbsthemmung der Schnecke 16 nicht zum Tragen kommt, kommt dem Schneckenradgetriebe der Wirkungsgrad eines nicht-selbsthemmenden Getriebes zu, wobei bei dem dargestellten Ausführungsbeispiel der Schneckenradmotor 17, wie ausgeführt, unterstützend wirkt.

Ist der Stellvorgang beendet, werden der Antriebsmotor 10 wie auch der Schneckenmotor 17 abgeschaltet. Wegen der selbsthemmenden Auslegung der Schnecke 16 ist bei ausgeschaltetem Schneckenmotor 17 das Schneckenrad 13 gegen ein durch Einwirkung auf das über die Abtriebswelle 15 angetriebene und mit der Abtriebswelle 15 gekoppelte Funktionselement ausgeübtes Drehmoment blockiert, so dass die gewünschte Selbsthemmung des gesamten Getriebes bewirkt ist.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Stellantrieb für bewegliche Funktionsteile in Kraftfahrzeugen wie Fenster, Tür, Schiebedach, Sitzverstellung, elektrische Parkbremse oder dergleichen, mit einem Antriebsmotor und einem nachgeschalteten, an das bewegliche Funktionsteil gekoppelten Getriebe, **dadurch gekennzeichnet, dass** wenigstens ein Getriebeteil (13) des Getriebes (11) in einer ständigen Wirkverbindung mit einer zusätzlichen, von einem Antrieb (Antriebsmotor 10; Schneckenmotor 17) synchron mit der Bewegung des Getriebeteils (13) angetriebenen, selbsthemmend ausgelegten Schnecke (16) steht.

2. Stellantrieb nach Anspruch 1, **dadurch gekennzeichnet, dass** der Antrieb (Antriebsmotor 10; Schneckenmotor 17) für die Drehung der selbsthemmenden Schnecke (16) in beiden Drehrichtungen des Getriebeteils (13) eingerichtet ist.

3. Stellantrieb nach Anspruch 1 oder 2, **dadurch gekennzeichnet, dass** dass zum Antrieb der selbsthemmenden Schnecke (16) ein gesonderter Schneckenmotor (17) vorgesehen ist.

4. Stellantrieb nach Anspruch 1 oder 2, **dadurch gekennzeichnet , dass** dass die selbsthemmende Schnecke (16) an den Antriebsmotor (10) als Antrieb für die Drehung der Schnecke (16) gekoppelt ist.

5. Stellmotor nach einem der Ansprüche 1 bis 4, **dadurch gekennzeichnet , dass** dass das Getriebe als Stirnrad-getriebe ausgebildet ist und die selbsthemmende Schnecke (16) in ständigem Kämmeingriff mit der an einem Stirnrad ausgebildeten Verzahnung steht.

6. Stellantrieb nach einem der Ansprüche 1 bis 4, **dadurch gekennzeichnet , dass** das Getriebe als Schneckenradgetriebe (11) ausgebildet ist und die selbsthemmende Schnecke (16) in ständigem Kämmeingriff mit der an dem Schneckenrad (13) ausgebildeten Verzahnung (14) steht.
